Europäisches Patentamt

European Patent Office

Office européen des brevets

(19)

(11) Veröffentlichungsnummer: **0 220 447**
**B1**

(12) EUROPÄISCHE PATENTSCHRIFT

(45) Veröffentlichungstag der Patentschrift:
11.07.90

(21) Anmeldenummer: 86112519.3

(22) Anmeldetag: 10.09.86

(51) Int. Cl.⁵: **H02K 29/08**

(54) Elektromotor, insbesondere dauermagneterregter Aussenläufermotor.

(30) Priorität: 23.09.85 DE 3533883

(43) Veröffentlichungstag der Anmeldung:
06.05.87 Patentblatt 87/19

(45) Bekanntmachung des Hinweises auf die Patenterteilung:
11.07.90 Patentblatt 90/28

(84) Benannte Vertragsstaaten:
AT DE FR GB IT NL

(56) Entgegenhaltungen:
DE-A- 2 345 150
DE-A- 3 331 754
DE-A- 3 427 994
US-A- 4 311 933

JOURNAL OF ELECTRONIC ENGINEERING, Band 22,
Nr. 223, Juli 1985, Seiten 36-39, Kanagawa, JP; S.
NAGAMORI: "Getting the most effective use from
brushless DC motors"
PATENTS ABSTRACTS OF JAPAN, Band 7,
Nr. 136 (E-181)[1281], 14. Juni 1983; & JP-A-58 51 764

(73) Patentinhaber: **Siemens Aktiengesellschaft,
Wittelsbacherplatz 2, D-8000 München 2(DE)**

(72) Erfinder: **Klein, Hans-Wilhelm, Dipl.-Ing.,
Schlesierstrasse 42, D-8700 Würzburg(DE)**
Erfinder: **Grecksch, Ernst, Dr.,
Konrad-Adenauer-Strasse 47, D-8702 Estenfeld(DE)**
Erfinder: **Schmidt, Helmut, Unterer Weinberg 44,
D-8701 Reichenberg(DE)**

**Beschreibung**

Die Erfindung bezieht sich auf einen Elektromotor, insbesondere einen dauermagneterregten Außenläufermotor entsprechend dem Oberbegriff des Anspruchs 1.

Gemäß Aufgabe vorliegender Erfindung soll einerseits ermöglicht werden, daß bei einem Elektromotor der vorgenannten Art die Spulenwicklungsenden der Statorwicklung erst bei bereits am Stator in seiner vorgesehenen Lage montiertem und dadurch nur noch von der statorseitigen Vorderseite verlötbaren Leiterplatte an deren Leiterbahnen und über diese an ihre äußere Wicklungsspeiseleitung angeschlossen werden und andererseits der Aufwand für die Leiterplatte wesentlich gemindert werden können, die für das vorliegende Problem entsprechend der bisher üblichen Praxis an sich beidseitig mit Leiterbahnen und zusätzlich mit einer aufwendigen sogenannten Durchkontaktierung zu versehen wäre; zur Durchkontaktierung werden dabei Stifte fest in die Leiterplatte eingelassen, die eine elektrische Verbindung zwischen Rückseite und Vorderseite der Leiterplatte schaffen, so daß z.B. ein an der Rückseite vormontiert angeschlossenes gemeinsames, die Versorgungs- und Signalspannungsleitungen als auch die Wicklungsspeiseleitungen enthaltenes Kabel mit Anschlußenden aus der Vorderseite der Leiterplatte herausragt, an die dann bei montierter Leiterplatte die Wicklungsenden der Statorwicklung ungehindert von der Vorderseite der Leiterplatte her angelötet werden können.

Die Lösung der gestellten Aufgabe ist bei einem Elektromotor der eingangs genannten Art erfindungsgemäß durch die Lehre des Anspruchs 1 möglich; die Gegenstände der Unteransprüche kennzeichnen vorteilhafte Ausgestaltungen der Erfindung gemäß Anspruch 1.

Die erfindungsgemäße Konstruktion erlaubt einerseits in einem Vormontagevorgang die Versorgungs- und Signalspannungsleitungen sowie die äußeren Wicklungsspeiseleitungen an die dafür vorgesehenen Leiterbahnen der Leiterplatte an deren Rück- und Vorderseite anzulöten und andererseits bei in ihrer endgültigen Lage montierter Leiterplatte die Spulenwicklungsenden der Statorwicklung an der Vorderseite der Leiterplatte anzulöten und über die zugeordneten Leiterbahnen an der Vorderseite zu den Anlötpunkten der Wicklungsspeiseleitungen zu führen, ohne daß dazu Durchkontaktierungselemente in der Leiterplatte notwendig sind, die sich dadurch in wesentlich kostengünstiger aber trotzdem eine volle Betriebstüchtigkeit gewährleistender Weise fertigen läßt.

Zur weiteren Vereinfachung des Anschlusses der Versorgungs- und Signalspannungsleitungen einerseits und der Wicklungsspeiseleitungen an die Spulenwicklungsenden ist nach einer Ausgestaltung der Erfindung vorgesehen, daß die Versorgungs- und Signalspannungsleitungen und die Wicklungsspeiseleitungen Teile eines gemeinsamen Flachbandkabels sind, das an seinem leiterplattenseitigen Ende in einen ersten, mit seinen Lötenden von der Vorderseite in Lötanschlüssen auf der Rückseite der Leiterplatte durchgesteckten Flachkabelteil und in einen zweiten, mit seinen Lötenden von der Rückseite in Lötanschlüsse auf der Vorderseite der Leiterplatte durchgesteckten Flachbandkabelteil aufgeschlitzt ist, wobei zweckmäßigerweise das andere, von der Leiterplatte abgewandte Ende des gemeinsamen Flachbandkabels an einen, sämtliche Anschlüsse enthaltenden Zentralstecker angeschlossen ist.

Um einerseits eine gute Zugänglichkeit der Lötanschlüsse für die Spulenwicklungsenden an der Vorderseite der Leiterplatte und andererseits einen möglichst geringen Abstand zwischen den auf der Vorderseite der Leiterplatte gehalterten Hallwandlern und den zugeordneten rotorseitigen Dauermagneten gewährleisten zu können, ist weiterhin vorgesehen, daß die Leiterplatte kreisringförmig ausgebildet ist, an deren innerem Rand die Hallwandler und an deren äußeren Rand die Durchstecköffnungen für die Anschlußenden der Spulenwicklungsenden vorgesehen sind. Zweckmäßigerweise sind zum besonders einfachen Einfädeln sowohl die Durchstecköffnungen für die Anschlußenden der äußeren Wicklungsspeiseleitungen als auch die Durchstecköffnungen für die Anschlußenden der Spulenwicklungsenden als jeweils zum inneren bzw. äußeren Rand schlitzförmige Einfädelöffnungen ausgebildet.

Die Erfindung sowie weitere vorteilhafte Ausgestaltungen der Erfindung werden im folgenden eines anhand schematisch dargestellten Ausführungsbeispiels in der Zeichnung näher erläutert; darin zeigen:

Fig. 1 einen axialen Längsschnitt durch einen zum Antrieb einer Plattenspindel eines Plattenspeicherantriebs vorgesehenen Außenläufermotor;

Fig. 2 eine vorgefertigte, bereits mit aktiven und assiven elektrischen Bauelementen bestückte und an ein äußeres Flachbandkabel angeschlossene Leiterplatte vor ihrer statorstirnseitigen Motormontage;

Fig. 3 eine Ansicht der Leiterplatte gemäß Fig.2 in Richtung III;

Fig. 4 eine Ansicht der Leiterplatte gemäß Fig.2 in Richtung III;

Fig. 5 eine Ansicht der Leiterplatte gemäß Fig.2 in Richtung IV;

Fig. 6 die statorseitige Vorderansicht der zwar beidseitig kaschierten, jedoch ansonsten noch nicht bestückten und angeschlossenen Leiterplatte;

Fig. 7 die befestigungsflanschseitige Rückansicht der zwar beidseitig kaschierten, jedoch ansonsten noch nicht bestückten und angeschlossen Leiterplatte.

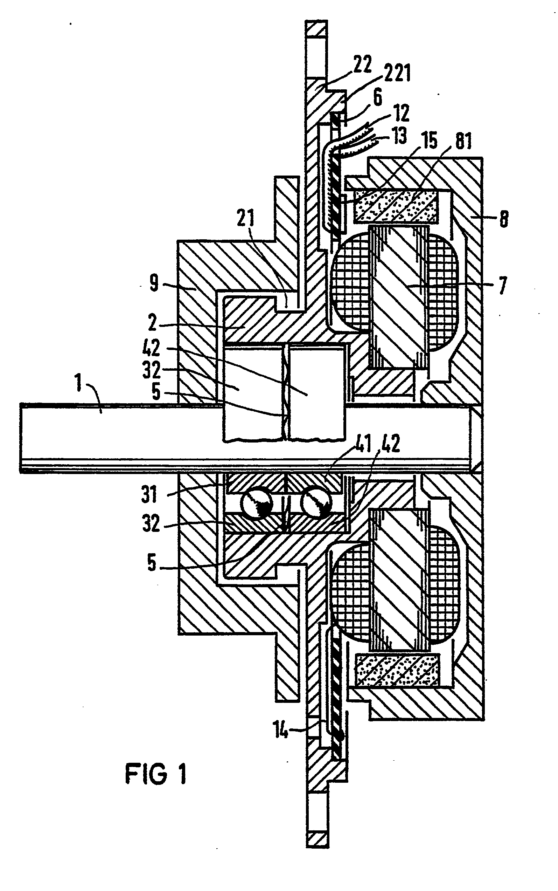

Fig.1 zeigt in einem axialen Längsschnitt einen Außenläufermotor, der eine Plattenspindel 9 eines Plattenspeichers antreibt und über einen an seinem Lagerflansch 2 angeformten Befestigungsflansch 22 in einem Datenverarbeitungsgerät einbaubar ist; der Lagerflansch 2 dient dabei mittel- bzw. unmittelbar als tragendes Bauteil für sämtliche in den Zeichnungen dargestellten Bauteile.

Auf das rechte Ende des Lagerflansches 2 ist zunächst ein bewickeltes Statorblechpaket 7 aufgedrückt. Im linken, axial vor dem bewickelten Statorblechpaket 7 liegenden Teil des Lagerflansches 2 ist eine Lagerbohrung eingelassen, in die zwei Kugellager 3,4 unter Zwischenlage einer Federscheibe 5 mit in Umfangsrichtung gewellter Oberfläche von der linken offenen Stirnseite der Lagerbohrung her eingeschoben sind. In den Kugellagern 3,4 ist eine Rotorwelle 1 gelagert, auf deren linkes Ende eine Plattenspindel 9 und auf deren rechtes Ende eine Läuferglocke 8 eines Außenläufermotors befestigt ist, an deren radial äußeren Enden Magnetschalen 81 zur Bildung des Erregerfeldes des Außenläufermotors gehalten sind.

An der dem bewickelten Stator zugewandten Stirnseite des Befestigungsflansches 22 ist innerhalb eines axial vorstehenden umlaufenden Randes 221 eine Leiterplatte 6 gehaltert, auf der u.a. den betriebsmäßig rotierenden Dauermagnetschalen 81 zugeordnete und daher stirnseitig benachbart angeordnete Hallwandler 15 angeordnet sind. An die Leiterbahnen der an ihrer Vorder- und ihrer Rückseite kaschierten Leiterplatte 6 sind außerdem Versorgungs- und Signalspannungsleitungen eines ersten Flachbandkabels 12 sowie äußere Steuerungsspeiseleitungen eines zweiten Flachbandkabelteils 13 für die Spulenwicklungsenden 14 der im Statorblechpaket 7 eingebrachten Statorwicklung kontaktiert.

Um einerseits vor dem Einbringen der Kugellager 3,4 bereits den Lagerflansch 2 an seinem rechten Ende mit dem bewickelten Statorblechpaket 7 bestücken und die Statorwicklung an die an dem Befestigungsflansch gehaltene Leiterplatte voll anschließen zu können und andererseits den Lagerflansch beschädigungsfrei, insbesondere im Bereich seines dünnwandigen Übergangs von der Lagerbohrung zum Statoraufnahmeteil bei dem Eindrücken der beiden Kugellager 3,4, abstützen zu können, ist in vorteilhafter Weise am Außenumfang des Lagerflansches 2 eine Ausnehmung in Form einer umlaufenden Nut 21 für eine Abstützung gegenüber der axialen Druckkraft, mit der die Kugellager 3,4 in den Lagerflansch 2 eingedrückt werden, vorgesehen. Durch die Abstützung können einerseits die Reaktionskräfte in einem dickwandigen Teil des Lagerflansches aufgenommen und somit zu starke Biegebeanspruchung von verformungsgefährten Teilen des Lagerflansches ferngehalten und andererseits der rechts von der Abstützung liegende Teil des Lagerflansches unbehindert für eine Vormontage des Stators bzw. einer Leiterplatte zur Verfügung gestellt werden, da von dieser Seite eine axiale Abstützung gegenüber der Druckkraft für die Kugellager nicht angesetzt zu werden braucht.

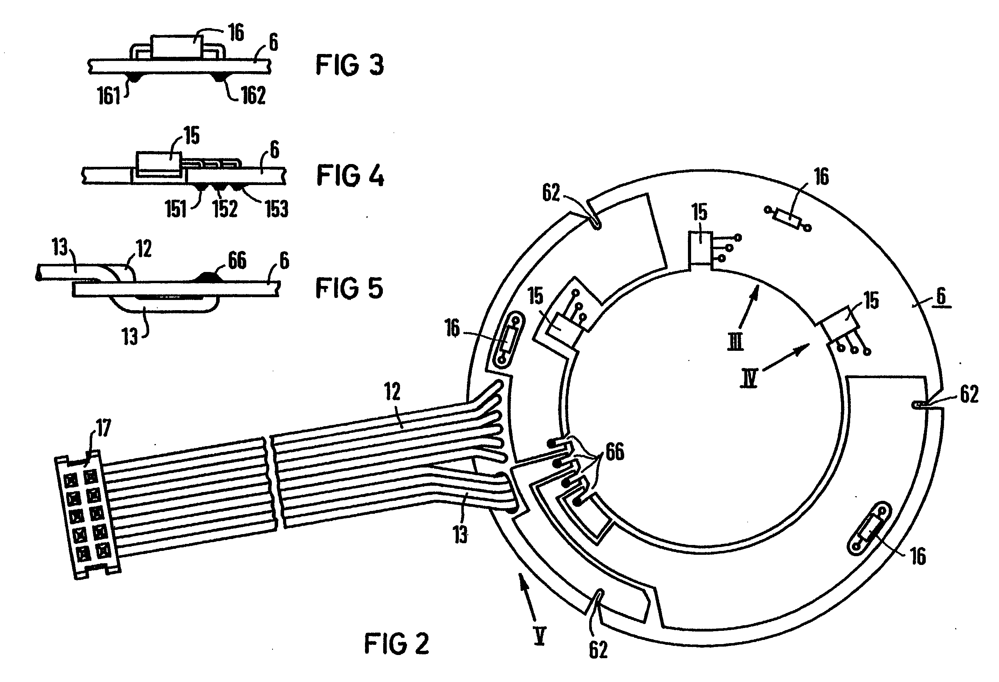

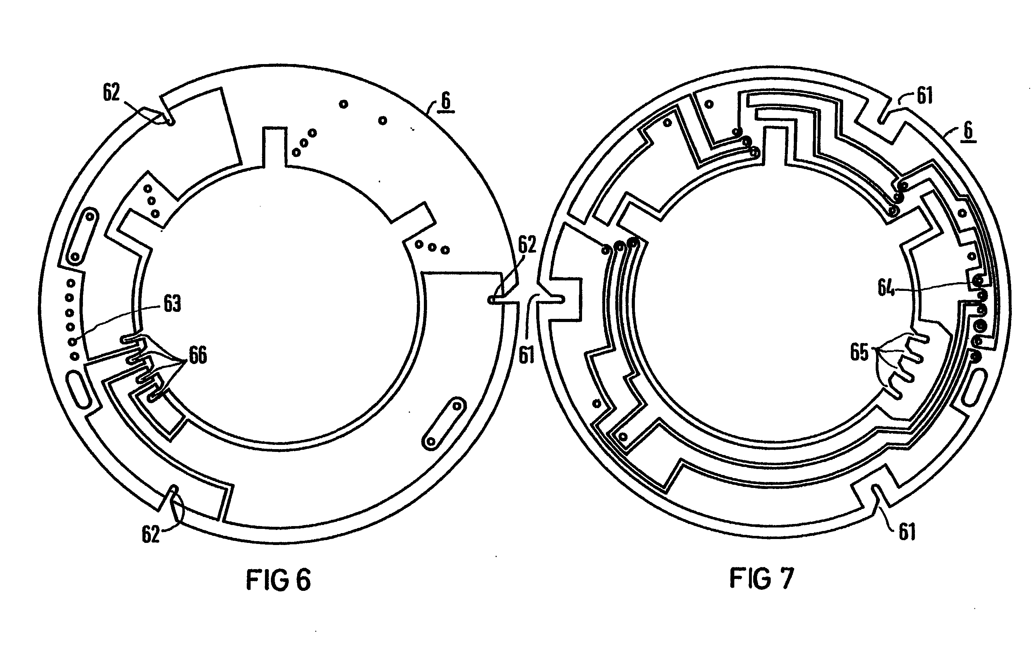

Fig.2 zeigt in einer statorstirnseitigen Draufsicht die Vorderseite der am Befestigungsflansch 22 gehalterten kreisringförmigen Leiterplatte 6 im vormontierten Zustand unmittelbar vor ihrem Einbau in den Befestigungsflansch. Fig.6 zeigt die Vorderansicht der Leiterplatte 6 im noch unbestückten, jedoch mit Leiterbahnen versehenen Zustand. Fig.7 zeigt die im montierten Zustand der Leiterplatte der statorseitigen Stirnseite des Befestigungsflansches zugewandte Rückseite ebenfalls im noch unbestückten, jedoch mit Leiterbahnen versehenen Zustand.

Wie insbes. aus Fig.2 ersichtlich, sind am inneren Kreisringrand der Leiterplatte 6 drei Hallwandler 5 derart angeordnet, daß sie gemäß der Darstellung in Fig.1 möglichst nahe den gegenüberliegenden Stirnseiten der Dauermagnetschalen 81 des Rotors des Außenläufermotors zugewandt sind, derart daß in den Hallwandlern drehzahlabhängige bzw. lageabhängige Signalspannungen erzeugt werden. Die seitlichen Anschlußenden der Hallwandler 15 sind durch Öffnungen der Leiterplatte 6 zur Rückseite der Leiterplatte 6 durchgesteckt und dort - wie insbes. aus der Detaildarstellung gemäß Fig.4 ersichtlich - mit den ihnen zugeordneten Leiterbahnen in Lötpunkten 151-153 verlötet. In ähnlicher Weise sind - wie aus der Detaildarstellung gemäß Fig.3 ersichtlich - Widerstände 16 auf der Vorderseite der Leiterplatte 6 gehaltert, mit ihren Anschlußenden durch Öffnungen zur Rückseite der Leiterplatte 6 durchgesteckt und dort in Lötpunkten 161,162 mit ihren Leiterbahnen kontaktiert.

Wie aus Fig.2 ersichtlich, führt von einem äußeren Zentralstecker 17 ein gemeinsames Flachbandkabel zu der Leiterplatte 6, das am leiterplattenseitigen Ende in einen ersten Flachbandkabelteil 12 und in einen zweiten Flachbandkabelteil 13 aufgeschlitzt ist. Der Flachbandkabelteil 12 enthält einerseits die Versorgungsleitungen für die Hallwandler und andererseits die Signalspannungsleitungen, über die die lage- bzw. drehzahlabhängigen Signale der Hallwandler 15 über den Zentralstecker 17 zu einer äußeren Steuereinheit gelangen, von der anschließend über die im Flachbandkabelteil 13 enthaltenen Wicklungsspeiseleitungen die Stromversorgung der an die Wicklungsspeiseleitungen anzuschließenden Spulenwicklungsenden 14 der Statorwicklung erfolgen kann.

Wie zuvor geschildert sind die Anschlußenden der Hallwandler 15 und der Widerstände 16 von der Vorderseite der Leiterplatte 6 zur Rückseite der Leiterplatte 6 durchgesteckt und dort mit den Leiterbahnen verlötet. Zur Verbindung dieser Leiterbahnen mit den Leitungen des Flachbandkabelteils 12 sind dessen Anschlußenden an der Vorderseite der Leiterplatte 6 durch Durchstecköffnungen 63 zur Rückseite der Leiterplatte 6 geführt und dort an Lötpunkten 64 mit den u.a. zu den Hallwandlern 15 führenden Leiterbahnen verlötet. Wie aus Fig.6 ersichtlich, befinden sich die Durchsteköffnungen 63 an der Vorderseite der Leiterplatte 6 in einem nicht kaschierten, d.h. nicht mit Leiterbahnen belegten Plattenteil.

Zum Anschluß des die Wicklungsspeiseleitungen enthaltenden Flachbandkabelteils 13 an die Spulenwicklungsenden 14 der Statorwicklung sind in vorteilhafter Weise die Anschlußenden der Wicklungsspeiseleitungen von der Rückseite der Leiterplatte 6 durch Durchsteköffnungen 65 in Form von randseitig offenen Schlitzen zur Vorderseite der Leiterplatte 6 durchgesteckt und in Lötpunkten 66 mit entsprechenden Leiterbahnen der Vorderseite verbunden, die ihrerseits dann zu Durchsteköffnungen 61 am Umfang des äußeren Kreisringrandes der Leiterplatte 6 für die Anschlußenden der Wicklungsspeiseleitungen führen. Die Verlegung des leiterplattenseitig geschlitzten Flachbandkabels ist zusätzlich durch die Detaildarstellung gemäß Fig.5 verdeutlicht.

Die wie zuvor beschriebene vorkonfektionierte, in Fig.2 dargestellte Leiterplatte 6 wird vor ihrem Verlöten mit den Spulenwicklungsenden beim Aufstecken des Statorblechpaketes 7 auf den Lagerflansch 2 in ihre endgültige Position am Lagerflansch 2 des Außenläufermotors gemäß Fig.1 gebracht; dabei sind die losen Spulenwicklungsenden 14 der Statorwicklung entlang der Rückseite der kreisringförmigen Leiterplatte verlaufend in die zur äußeren Kreisringseite hin offenen Schlitze 61 eingehängt. Danach kann dann der endgültige Lötanschluß der Spulenwicklungsenden 14 der Statorwicklung an die davor vorgesehenen Lötpunkte 62 an der Vorderseite der Leiterplatte 6 an die zugeordneten Leiterbahnen, die die Spulenwicklungsenden 14 stromleitend mit den vorderseitigen Lötpunkten der Wicklungsspeiseleitungen verbinden.

Es ist ersichtlich, daß in vorteilhafter Weise der Anschluß der Spulenwicklungsenden der Statorwicklung an der gut zugänglichen Vorderseite der bereits in ihre endgültige motorseitige Halterung gebrachten Leiterplatte erfolgen kann, wobei trotz beidseitiger Kaschierung der Leiterplatte eine aufwendige Durchkontaktierung nicht notwendig ist.

**Patentansprüche**

1. Elektromotor, insbesondere dauermagneterregter Außenläufermotor, mit axial vor der einen Statorstirnseite zu montierender, im montierten Zustand nur von der statorseitigen Vorderseite kontaktierbare Leiterplatte mit Leiterbahnen sowohl auf ihrer Vorderseite als auch auf ihrer Rückseite, die mit auf der Vorderseite gehaltenen passiven und/oder aktiven elektrischen Bauelementen, mit äußeren Wicklungsspeiseleitungen und Signalspannungs- sowie Versorgungsleitungen als auch mit Spulenwicklungsenden kontaktiert sind, **gekennzeichnet** durch folgende Merkmale:
a) Die passiven und/oder aktiven elektrischen Bauelemente (Hallwandler 15, Widerstände 16) sind an der Leiterplatte (6) vormontiert und mit ihren Anschlußenden durch Durchstecköffnungen von der Vorderseite zur Rückseite der Leiterplatte (6) durchgesteckt und dort mit zugeordneten Leiterbahnen auf der Rückseite kontaktiert;
b) mit den passiven und/oder aktiven Bauelementen zu verbindende Versorgungs- und Signalspannungsleitungen (erster Flachbandkabelteil 12) sind vormontiert mit ihren Anschlußenden durch Durchstecköffnungen (63) isoliert von der Vorderseite zur Rückseite der Leiterplatte (6) durchgesteckt und dort mit den zugeordneten Leiterbahnen auf der Rückseite kontaktiert;
c) äußere Wicklungsspeiseleitungen (zweiter Flachbandkabelteil 13) sind mit ihren Anschlußenden durch Durchstecköffnungen (65) isoliert von der Rückseite zur Vorderseite der Leiterplatte (6) durchgeführt und dort mit zugeordneten Leiterbahnen auf der Vorderseite kontaktiert;
d) Spulenwicklungsenden (14) sind mit ihren Anschlußenden durch Durchstecköffnungen (61) isoliert von der Rückseite zur Vorderseite der Leiterplatte (6) durchgesteckt und mit zugeordneten Leiterbahnen auf der Vorderseite kontaktiert.

2. Elektromotor nach Anspruch 1, **dadurch gekennzeichnet**, daß die Versorgungs- und Signalspannungsleitungen und die Wickungsspeiseleitungen Teile eines gemeinsamen Flachbandkabels sind, das an seinem einen der Leiterplatte zugewandten Ende in einen ersten, mit seinen Lötenden von der Vorderseite in Lötanschlüsse auf der Rückseite der Leiterplatte (6) durchgesteckten Flachbandkabelteil (12) und in einen zweiten, von der Rückseite mit seinen Lötenden in Lötanschlüsse auf der Vorderseite der Leiterplatte (6) durchgesteckten Flachbandkabelteil (13) aufgeschlitzt ist.

3. Elektromotor nach Ansprcuh 2, **dadurch gekennzeichnet**, daß das andere, der Leiterplatte (6) abgewandte Ende an einen sämtliche Anschlüsse aufnehmenden Zentralstecker (17) angeschlossen ist.

4. Elektromotor nach einem der Ansprüche 1 bis 3, **dadurch gekennzeichnet**, daß die Leiterplatte (6) kreisringförmig ausgebildet und die Hallwandler (15) im Sinne einer Ausgangsseitigen rotordrehzahlabhängigen Signalspannung in unmittelbarer Nähe zu den Stirnseiten von rotorseitigen Dauermagneten auf der Vorderseite der Leiterplatte (6) im Bereich des inneren Kreisringrandes gehaltert und die Durchstecköffnungen (61) für die Spulenwicklungsenden (14) am äußeren Kreisringrand angeordnet sind.

5. Elektromotor nach Anspruch 4, **dadurch gekennzeichnet**, daß die Durchstecköffnungen (65) für die Anschlußenden der äußeren Wicklungsspeiseleitungen (Flachbandkabelteil 13) am inneren Kreisringrand der kreisringförmigen Leiterplatte (6) angeordnet sind.

6. Elektromotor nach einem der Ansprüche 4 und/oder 5, **dadurch gekennzeichnet**, daß die Durchstecköffnungen (61 bzw.65) für die Spulenwicklungsenden (14) bzw. für die Wicklungsspeiseleitungen (Flachbandkabelteil 13) als zum äußeren bzw. inneren Kreisringrand geöffnete, schlitzförmige Einfädelöffnungen ausgebildet sind.

7. Elektromotor nach Anspruch 6, **dadurch gekennzeichnet**, daß die Leiterplatte (6) zwischen einem axial vorstehenden, an den Befestigungsflansch (22) angeformten umlaufenden Rand (221) in geringen axialem Abstand zu dessen statorseitigen Stirnseite der Leiterplatte (6) durchgesteckten äußeren Wicklungsspeiseleitungen (zweiter Flachbandkabelteil 13) und die Spulenwicklungsendnen (14) in dem Zwischenraum zwisschen der statorseitigen Stirnseite des Befestigungsflansches (22) und der Rückseite der Leiterplatte (6) zu ihren Durchstecköffnungen (65 bzw.61) verlegt sind.

**Claims**

1. An electric motor, more particularly a permanent magnet-excited external rotor motor comprising a circuit board, which is to be mounted axially in front of the stator end face and in the mounted state can only be electrically connected from the front side facing the stator, the circuit board comprising conductor strips both on its front and back, which are electrically connected with passive and/or active electric components mounted on the front of the circuit board, external winding feed lines and signal voltage and supply lines as well as with coil winding ends, characterised by the following features:

a) the passive and/or active electric components (Hall transducers 15, resistors 16) are premounted on the circuit board (6) and their connecting ends are passed through insertion openings from the front to the back of the circuit board (6) and are connected at the back with associated conductor strips;

b) supply and signal voltage lines (first ribbon cable portion 12) to be connected with the passive and/or active components are premounted with their connecting ends passed in an insulated manner through insertion openings (63) from the front to the back of the circuit board (6) and are connected at the back with the associated conductor strips;

c) external winding feed lines (second ribbon cable portion 13) are passed in an insulated manner with their connecting ends through insertion openings (65) from the back to the front of the circuit board (6) and are connected at the front with associated conductor strips;

d) coil winding ends (14) are passed in an insulated manner with their connecting ends through insertion openings (61) from the back to the front of the circuit board (6) and are electrically connected at the front with associated conductor strips.

2. An electric motor according to claim 1, characterised in that the supply and signal voltage lines and the winding feed lines are parts of a common ribbon cable, which is split at its end facing the circuit board into a first ribbon cable portion (12), with its solder ends passed through solder connections from the front to the back of the circuit board (6), and a second ribbon cable portion (13), with its solder ends passed through solder connections from the back to the front of the circuit board (6).

3. An electric motor according to claim 2, characterised in that the other end of the ribbon cable facing away from the circuit board (6) is connected to a central plug (17) receiving all the connections.

4. An electric motor according to one of claims 1 to 3, characterised in that the circuit board (6) is designed so as to be circular ring-shaped and the Hall transducers (15) are mounted for an output-side rotational speed-dependent signal voltage in the direct vicinity of the end faces of rotor-side permanent magnets on the front of the circuit board (6) in the region of the inner circular ring edge and the insertion openings (61) for the coil winding ends (14) are arranged at the outer circular ring edge.

5. An electric motor according to claim 4, characterised in that the insertion openings (65) for the connecting ends of the external winding feed lines (ribbon cable portion 13) are arranged on the inner circular ring edge of the circular ring-shaped circuit board (6).

6. An electric motor according to one of claims 4 and/or 5, characterised in that the insertion openings (61 or 65) for the coil winding ends (14) and for the winding feed lines (ribbon cable portion 13) respectively are designed as slit-shaped threading openings which open towards the outer and inner circular ring edge respectively.

7. An electric motor according to claim 6, characterised in that the circuit board (6) is mounted between an axially projecting peripheral edge (211) integrally formed with the securing flange (22) at a short axial distance from the latter's stator-side face and the external winding feed lines (second ribbon cable portion 13) and coil winding ends (14) passed through from the rear to the front of the circuit board (6) are guided in the intermediate space between the stator-side face of the securing flange (22) and the back of the circuit board (6) to their insertion openings (65 or 61).

**Revendications**

1. Moteur électrique, notamment moteur à induit extérieur excité par des aimants permanents, comportant une plaquette à circuits imprimés, qui doit être montée axialement devant une face frontale du stator, peut être raccordée, à l'état monté, uniquement à partir de la face avant tournée du côté du stator, qui comporte des voies conductrices situées aussi bien sur sa face avant que sur sa face arrière, et sont contactées avec des composants électriques passifs et/ou actifs, maintenus sur la face avant, avec des conducteurs extérieurs d'alimentation de l'enroulement et avec des conducteurs appliquant des tensions de signaux ainsi qu'avec des extrémités de l'enroulement de la bobine, caractérisé par les caractéristiques suivantes:

a) les composants électriques passifs et/ou actifs (transducteurs de Hall 15, résistances 16) sont préalablement montés sur une plaquette à circuits imprimés (6) et sont enfichés, par leurs extrémités de raccordement dans des ouvertures d'enfichage depuis la face avant en direction de la face arrière de la plaquette à circuits imprimés (6) et sont, en cet endroit, raccordés à des voies conductrices associées présentes sur la face arrière;

b) des conducteurs d'alimentation et des conducteurs d'application de tensions de signaux (première partie 12 d'un câble en forme de bande plate), qui doivent être réunis aux composants passifs et/ou actifs sont, à l'état préassemblés, enfichés par leurs extrémités de raccordement à travers des ouvertures d'enfichage (63) en étant isolés, depuis la face avant en direction de la face arrière de la plaquette à circuits imprimés (6) et sont, en cet endroit, raccordés aux voies conductrices associées sur la face arrière;

c) des conducteurs extérieurs d'alimentation de l'enroulement (seconde partie du conducteur en forme de bande plate 13) traversent, par leurs extrémités de raccordement, des ouvertures d'enfichage (65), en étant isolés, depuis la face arrière en direction de la face avant de la plaquette à circuits imprimés (6) et sont raccordés, en cet endroit, à des voies conductrices associées sur la face avant;

d) des extrémités (14) de l'enroulement de la bobine sont enfichées par leurs extrémités de raccordement dans des ouvertures d'enfichage (61), d'une manière isolée, depuis la face arrière en direction de la face avant de la plaquette à circuits imprimés (6) et sont raccordées à des voies conductrices associées sur la face avant.

2. Moteur électrique suivant la revendication 1, caractérisé par le fait que les conducteurs d'alimentation, les conducteurs d'application des tensions de signaux et les conducteurs d'alimentation de l'enroulement sont des éléments d'un câble commun en forme de bande plate, qui est subdivisé, au niveau de son extrémité tournée vers la plaquette à circuits imprimés, en une première partie (12), enfichée par ses extrémités soudables à partir de la face avant dans des cosses à souder situées sur la face arrière de la plaquette à circuits imprimés (6), et en une seconde partie (13) enfichée par ses extrémités soudables, à partir de la face arrière, dans des cosses à souder situées sur la face avant de la plaquette à circuits imprimés (6).

3. Moteur électrique suivant la revendication 2, caractérisé par le fait que l'autre extrémité, tournée à l'opposé de la plaquette à circuits imprimés (6), est raccordée à un connecteur central (17) logeant toutes les bornes.

4. Moteur électrique suivant l'une des revendications 1 à 3, caractérisé par le fait que la plaquette à circuits imprimés (6) est réalisée sous la forme d'un anneau circulaire et que les transducteurs de Hall (15) sont maintenus à proximité directe des faces frontales d'aimants permanents situés sur le rotor, sur la face avant de la plaquette à circuits imprimés (6) dans la partie du bord intérieur de l'anneau circulaire, dans le sens de l'obtention d'une tension de signaux délivrée sur la sortie et dépendante de la vitesse de rotation du rotor, et que les ouvertures d'enfichage (61) pour les extrémités (14) de l'enroulement de la bobine sont disposées sur le bord extérieur de l'anneau circulaire.

5. Moteur électrique suivant la revendication 4, caractérisé par le fait que l'ouverture d'enfichage (65) pour les extrémités de raccordement des conducteurs extérieurs d'alimentation de l'enroulement (partie 13 du câble en forme de bande plate) sont disposées sur le bord intérieur de l'anneau circulaire de la plaquette à circuits imprimés (6) en forme d'anneau circulaire.

6. Moteur électrique suivant l'une des revendications 4 et/ou 5, caractérisé par le fait que les ouvertures d'enfichage (61, 65) pour les extrémités (14) de l'enroulement de la bobine ou pour les conducteurs d'alimentation de l'enroulement (partie 13 du câble en forme de bande plate) sont réalisées sous la forme d'ouvertures d'enfilage en forme de fentes, s'ouvrant en direction du bord extérieur ou du bord intérieur de l'anneau circulaire.

7. Moteur électrique suivant la revendication 6, caractérisé par le fait que la plaquette à circuits imprimés (6) est maintenue entre un bord périphérique (221), qui fait saillie axialement et est formé par moulage sur la bride de fixation (22), à une faible distance axiale de la face frontale de cette bride tournée du côté du stator, et que les conducteurs extérieurs d'alimentation de l'enroulement (seconde partie 13 du câble en forme de bande plate), qui sont enfichés depuis la face arrière en direction de la face avant de la plaquette à circuits imprimés (6), et les extrémités (14) de l'enroulement de la bobine s'étendent dans l'espace intercalaire compris entre la face frontale, tournée du côté du stator, de la bride de fixation (22) et la face arrière de la plaquette à circuits imprimés (6), en direction de leurs ouvertures d'enfichage (65 ou 61).

EP 0 220 447 B1

FIG 1

FIG 3

FIG 4

FIG 5

FIG 2

EP 0 220 447 B1

FIG 6

FIG 7

EP 0 220 447 B1